# EUROPEAN PATENT SPECIFICATION

(11) **EP 3 901 657 B1**
(45) Date of publication and mention of the grant of the patent: **21.01.2026**
(21) Application number: 21169846.9
(22) Date of filing: 22.04.2021
(51) Int. Cl.: G01S 7/52, G01S 15/96

(54) **UNDERWATER DETECTION DEVICE AND METHOD OF CALIBRATING THE SAME**
UNTERWASSER-DETEKTIONSVORRICHTUNG UND VERFAHREN ZUR KALIBRIERUNG DERSELBEN
DISPOSITIF DE DÉTECTION SOUS-MARINE ET SON PROCÉDÉ D'ÉTALONNAGE

(30) Priority: 24.04.2020 JP 2020077463
(43) Date of publication of application: 27.10.2021
(73) Proprietor: FURUNO ELECTRIC CO., LTD., Nishinomiya-City, Hyogo 662-8580 (JP)
(72) Inventor: MISONOO, Satoshi, Nishinomiya-city, 662-8580 (JP); MATSUMURA, Takashi, Nishinomiya-city, 662-8580 (JP); NISHIKUBO, Daisuke, Nishinomiya-city, 662-8580 (JP)
(74) Representative: Cleveland Scott York

(56) References cited:
- US-A1- 2011 164 467
- KENNETH G. FOOTE ET AL: "Protocols for calibrating multibeam sonar", THE JOURNAL OF THE ACOUSTICAL SOCIETY OF AMERICA, vol. 117, no. 4, 1 April 2005 (2005-04-01), New York, NY, US, pages 2013 - 2027, XP055536303, ISSN: 0001-4966, DOI: 10.1121/1.1869073
- GALLOWAY J L ED - INSTITUTE OF ELECTRICAL AND ELECTRONICS ENGINEERS: "SONAR CALIBRATIONS AT THE INSTITUTE OF OCEAN SCIENCES", ENGINEERING IN HARMONY WITH THE OCEAN. VICTORIA, OCT. 18 - 21, 1993; [PROCEEDINGS OF THE OCEANS CONFERENCE], NEW YORK, IEEE, US, vol. 3, 18 October 1993 (1993-10-18), pages III - 415, XP000509558, ISBN: 978-0-7803-1386-6
- MACLENNAN D N: "ACOUSTICAL MEASUREMENT OF FISH ABUNDANCE", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 87, no. 1, 1 January 1990 (1990-01-01), pages 1 - 15, XP000115363, ISSN: 0001-4966, DOI: 10.1121/1.399285

## Description

The present disclosure relates to an underwater detection device which transmits a sound wave underwater to detect an underwater condition based on a reflection wave of the transmitted sound wave, and a method of calibrating the underwater detection device based on a reflection wave reflected from a reference body for the calibration.

Conventionally, underwater detection devices which transmit a sound wave underwater to detect an underwater condition based on a reflection wave of the transmitted sound wave, are known. This type of device is calibrated at a given timing, such as before starting an oceanographic survey, in order to maintain reliability of the detection.

JP1997-054151A discloses to calibrate a fishfinder as one example of the underwater detection device, by using a calibration ball.

This fishfinder is provided with the calibration ball hung right below a transducer installed in a bottom of a ship, at a given depth using a fishing line. The transducer transmits sound waves directly below, and receives waves reflected on the calibration ball. Then, the fishfinder is calibrated based on reception levels of the reflection waves.

The transducer transmits a transmission beam, which is sound waves, to spread in a conical shape, and a range of the transmitted transmission beam is a detection range of a target object, such as a school of fish. This detection range includes not only a direction of a center axis of the transmission beam but also all directions within a range of a divergence angle of the transmission beam.

In the fishfinder described above, when detecting the school of fish, a calibration value obtained through a calibration for the transmission beam in the center-axis direction is uniformly applied to the reception levels of the reflection waves received from different directions in the detection range.

However, depending on a configuration of various parts of the fishfinder (e.g., the transducer), a change in the reception level due to time-related degradation of the parts, may differ according to the directions in the detection range. In such a case, the uniform application of the calibration value is difficult to sufficiently secure the detection accuracy. In this respect, a method may be adopted, in which a position of the calibration ball is sequentially moved within the range of the transmission beam so as to perform the calibration in each direction in the detection range. The calibration ball is moved manually or by a dedicated machine.

As described above, when the calibration is performed in each direction in the detection range, and the calibration ball is moved manually, a skilled technique is required to accurately move the calibration ball to a target position (direction) by adjusting the fishing line etc. Moreover, moving the calibration ball to all of the positions may take long time.

On the other hand, when the calibration ball is moved by a machine, an expensive machine needs to be introduced. Furthermore, moving the calibration ball to all of the positions may take long time, although it is not so much as the manual operation.

US 2011/164467 A1 discloses a method of obtaining an acoustic echo signal by a sonar apparatus. The method comprises measuring phases and magnitudes of at least one predetermined acoustic calibration signal received from a plurality of respective directions by the sonar apparatus; determining a complex directional response from the measured phases and magnitudes; receiving an acoustic echo signal; and compensating the received acoustic echo signal for the determined complex directional response.

The article "Protocols for calibrating multibeam sonar", Foote et al, The Journal of the Acoustical Society of America, vol. 117, no. 4, 1 April 2005, discloses protocols for calibrating multibeam sonar by means of the standard target method.

The article "Sonar Calibrations at the Institute of Ocean Sciences", Galloway, Engineering in Harmony with the Ocean, Victoria, Oct. 18-21, 1993, discloses calibration of complete systems installed in vessels using standard spherical targets.

The article "Acoustical measurement of fish abundance", MacLennan, J. Acoust. Soc. Am. 87 (1), January 1990 discloses the split beam method.

The present disclosure is made in view of solving the problems described above, and one purpose thereof is to provide an underwater detection device capable of easily and accurately being calibrated using a reference body for calibration in a short period of time, and a method of calibrating the underwater detection device.

According to one aspect of the present invention there is provided an underwater detection device as defined in claim 1.

According to another aspect of the invention there is provided a method of calibrating an underwater detection device as defined in claim 6.

Preferred features of the invention are recited in the dependent claims.

According to this configuration, as the direction of the transmission beam is sequentially changed, the direction (the position) of the reference body relative to the transmission beam sequentially moves. The calibration is performed based on the reception signal of the transducer corresponding to the reflection wave from the reference body in each direction. **In** this manner, the calibration for each direction is possible without moving the reference body. Thus, time required for the calibrations can be shortened.

A range of the transmission beam may be divided into a plurality of sections. In this case, the direction controlling module may execute the directional control to sequentially move the reference body to all the sections.

According to this configuration, the calibration for every section is possible without moving the reference body, and thus, time required for the calibrations of all the sections can be shortened.

In a case where the range of the transmission beam is divided into the plurality of sections as described above, the calibrating module may calibrate the underwater detection device regardless of whether the section to which the reference body is moved is the section to which the reference body is assumed to be moved based on the direction of the transmission beam.

According to this configuration, when the actually moved position of the reference body is not the assumed section, the calibration for the moved section can be performed first, and thus, the time required for the calibration can be further shortened.

In a case where the range of the transmission beam is divided into the plurality of sections, when the section for which the calibration is not finished remains after the direction controlling module executes the directional control for sequentially moving the reference body to all the sections, the direction controlling module may further execute the directional control for moving the reference body to the section for which the calibration is not finished.

According to this configuration, since the calibration for the section for which the calibration is not finished can be finished, the calibrations for all the sections can be performed without omission.

In a case where the range of the transmission beam is divided into the plurality of sections, the direction controlling module may correct the direction of the transmission beam according to a deviation between the section to which the reference body is assumed to be moved based on the direction of the transmission beam, and the section to which the reference body is actually moved.

According to this configuration, when the position of the reference body is deviated due to the influence of tide etc., the direction of the transmission beam may be adjusted accordingly, and thus, the time required for the calibration can be further shortened.

As described above, according to the present disclosure, an underwater detection device capable of easily and accurately being calibrated using a reference body for calibration in a short period of time, and a method of calibrating the underwater detection device, are provided.

The effects and purpose of the present disclosure will be clear from the following description of the embodiment. However, the embodiment described below is merely an example of implementing the present disclosure, and the present disclosure will not be limited to what described in the embodiment.

The present disclosure is illustrated by way of example and not by way of limitation in the figures of the accompanying drawings, in which like reference numerals indicate like elements and in which:
Fig. 1 is a view illustrating a mode of using an underwater detection device according to one embodiment;
Fig. 2 is a block diagram illustrating a configuration of the underwater detection device according to this embodiment;
Fig. 3 is a view illustrating a state in which a calibration ball is hung from a ship in order to calibrate the underwater detection device according to this embodiment;
Figs. 4A to 4C are views illustrating a directional control of a transmission beam by a direction controlling module according to this embodiment;
Fig. 5 is a flowchart illustrating calibration processing according to this embodiment;
Figs. 6A to 6D are views illustrating one example of a progress-showing image indicative of progress of the calibration according to this embodiment;
Fig. 7 is a flowchart illustrating calibration processing according to Modification 1;
Figs. 8A and 8B are views illustrating one example of correcting a direction of the transmission beam according to Modification 1; and
Fig. 9 is a flowchart illustrating calibration processing according to Modification 2.

Hereinafter, one embodiment of the present disclosure is described with reference to the drawings. The following embodiment describes an example of applying the present disclosure to an underwater detection device installed in a ship body of a fishing boat etc. However, the following embodiment is one embodiment of the present disclosure, and the present disclosure is not limited to the following embodiment. Note that the present disclosure may be applied to ships which typically travel on water or sea which are referred to as surface ships, and may also be applied to other types of ships including boats, dinghies, watercrafts, and vessels.

The underwater detection device of this embodiment is used as, for example, a fishfinder.

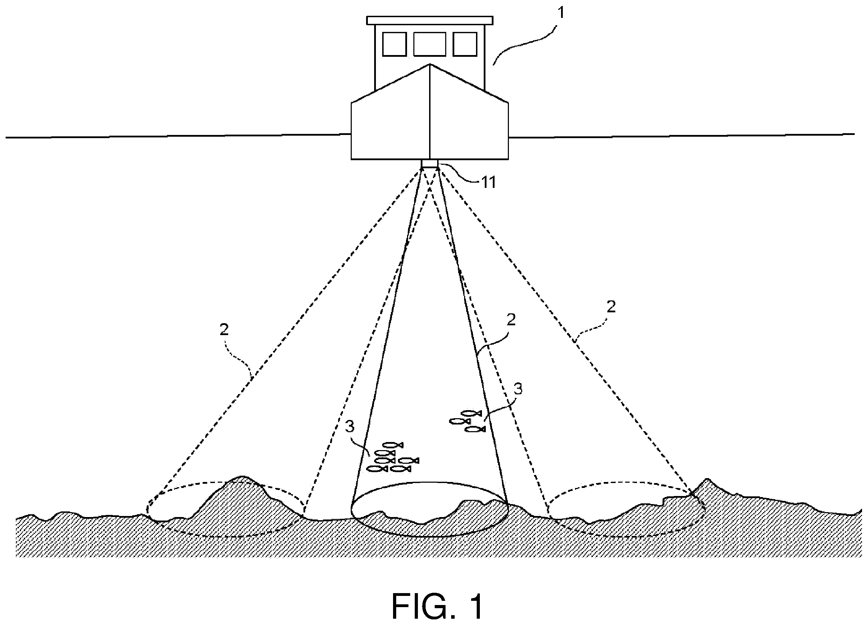

Fig. 1 is a view illustrating a mode of using the underwater detection device.

As illustrated in Fig. 1, in this embodiment, a transducer 11 constituting the underwater detection device is installed in a bottom of a ship 1, and transmits underwater a pulse transmission beam 2 which is an ultrasonic wave. The transducer 11 receives an echo of the transmitted ultrasonic wave so as to detect a fish 3. Here, a direction of and a distance to the fish 3 (i.e., a position of the fish 3), a length of the fish 3, etc., may be calculated. Based on the calculation results, an image representing a position and a size of a school of fish, and an image representing a distribution of the lengths of the fishes 3 included in the school of fish, may be displayed on a display unit installed, for example, in a wheelhouse of the ship 1.

In this embodiment, the transmission beam 2 spreads from the transducer 11 substantially in a cone shape. The range of the cone-shaped transmission beam 2 is a three-dimensional detection range of the transmission beam 2. The transmission beam 2 moves horizontally as the ship 1 travels.

In this embodiment, as illustrated by broken lines in Fig. 1, by the operation into a control unit installed in the wheelhouse of the ship 1, etc., the transmission beams 2 can be simultaneously transmitted in a plurality of directions from the transducer 11 (i.e., during one transmission and reception), and thus, a wide range can be detected at once. Moreover, the direction of the transmission beam 2 transmitted from the transducer 11 can be changed within 360° centering on the ship 1, and within a given angular range (e.g., 20°) from a direction of a center axis of the transducer 11 (i.e., a direction directly below the ship 1).

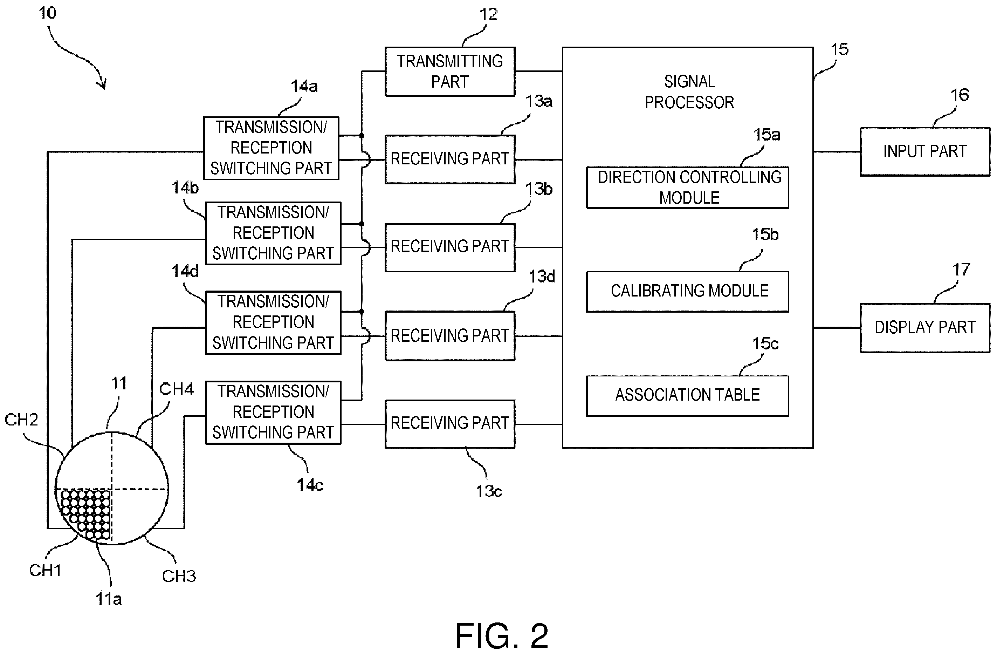

Fig. 2 is a block diagram illustrating a configuration of an underwater detection device 10. Note that in the transducer 11 of Fig. 2 only ultrasonic oscillators 11a of a channel CH1 are illustrated for convenience.

The underwater detection device 10 is provided with the transducer 11, a transmitting part 12, four receiving parts 13a to 13d, four transmission/reception switching parts 14a to 14d, a signal processor 15, an input part 16, and a display part 17.

The transducer 11 is installed in a ship bottom of the ship 1 to be oriented in a vertical direction (i.e., directly below the ship 1). The transducer 11 is divided into four channels CH1 to CH4 in front-and-rear and left-and-right directions. Each of the four channels CH1 to CH4 is provided with a plurality of arrayed ultrasonic oscillators 11a. For example, when the ship 1 is seen from front, the four channels CH1 to CH4 are located at a front left, a front right, a rear left, and a rear right, respectively.

Each ultrasonic oscillator 11a is applied with a transmission signal in a sine-wave shape to transmit an ultrasonic wave. Moreover, each ultrasonic oscillator 11a receives a reflection wave of the transmitted ultrasonic wave, and outputs a reception signal corresponding to an intensity of the reflection wave.

The transmitting part 12 is connected to the four channels CH1 to CH4 of the transducer 11 via the four transmission/reception switching parts 14a to 14d, respectively. The transmitting part 12 is controlled by the signal processor 15 to output the transmission signals to the ultrasonic oscillators 11a of all the channels CH1 to CH4 of the transducer 11. According to the invention, the transmitting part 12 controls a phase of the transmission signal to be outputted to each ultrasonic oscillator 11a so as to direct the transmission beam 2 in an arbitrary direction.

The four receiving parts 13a to 13d are connected to the channels CH1 to CH4 of the transducer 11 via the transmission/reception switching parts 14a to 14d, respectively. The receiving parts 13a to 13d receive inputs of the reception signals from the ultrasonic oscillators 11a of the corresponding channels CH1 to CH4. Each of the receiving parts 13a to 13d applies, to the reception signals from the ultrasonic oscillators 11a, a beam forming for controlling directivity of the wave reception by a phase control, so as to form reception beams covering the entire range (the entire detection range) of the transmission beam 2. Accordingly, four reception beams with different acoustic-center positions are formed to the corresponding channels CH1 to CH4 of the transducer 11. Each of the receiving parts 13a to 13d outputs the reception signals of the reception beam to the signal processor 15.

The four transmission/reception switching parts 14a to 14d connect the transmitting part 12 to the transducer 11 when the transducer 11 transmits the ultrasonic wave (the transmission beam 2), and connect the four receiving parts 13a to 13d to the transducer 11 when the transducer 11 receives the reflection wave.

The signal processor 15 is provided with an arithmetic circuit, such as a CPU (Central Processing Unit), and a storage medium, such as a ROM (Read Only Memory), a RAM (Random Access Memory), and a hard disk. The signal processor 15 executes a school-of-fish detection by controlling each part based on a program stored in the storage medium. The signal processor 15 may be comprised of an integrated circuit, such as an FPGA (Field-Programmable Gate Array).

Note that the signal processor 15 is not necessarily comprised of a single integrated circuit, but may be a set of a plurality of the integrated circuits and/or the arithmetic circuits. For example, the signal processor 15 may be provided with an arithmetic circuit which controls the transmitting part 12, the transmission/reception switching parts 14a to 14d, etc., and another arithmetic circuit which generates a given image by processing the reception signals inputted from the receiving parts 13a to 13d.

The input part 16 is a user interface which accepts an input from a user. The input part 16 may be provided with an inputting means, such as a mouse and a keyboard. The input part 16 may be provided with a touch panel integrated with the display part 17. The display part 17 may display an image generated by the signal processor 15. The display part 17 may be provided with a display unit, such as a monitor and a liquid crystal panel.

In the school-of-fish detection, the signal processor 15 causes the transmitting part 12 to transmit the transmission signals so as to transmit the transmission beam 2 from the transducer 11, and acquires from the four receiving parts 13a to 13d the reception signals of the reception beams corresponding to the reflection waves from the fish 3, which is the target object. The signal processor 15 applies processing in a split beam method to the acquired reception signals so as to calculate the direction, the distance, and the length of the fish 3 existing in the range of the transmission beam 2 (i.e., the detection range). The signal processor 15 may generate images based on the detection results, such as an image representing the position and size of the school of fish comprised of the detected fishes 3, and an image representing the distribution of the lengths of the fishes 3 in the school of fish, and then, cause the display part 17 to display them.

Note that although the length of the fish 3 is calculated based on a reflection intensity (target strength) of the fish 3 acquired from the reception signals, at this time, correction may be performed so that a difference in a reception sensitivity of the transducer 11 depending on the direction of the fish 3 decreases. Thus, an accuracy of measuring the length of the fish 3 may improve.

The underwater detection device 10 according to this embodiment can calibrate the underwater detection device 10 using a calibration ball (a reference body for calibration). The calibration is performed at a given timing, such as before starting an oceanographic survey. Accordingly, even when performance of the components (e.g., the ultrasonic oscillators 11a of the transducer 11, the transmitting part 12, and the receiving parts 13a to 13d) degrade over time, by applying a calibration value acquired through the calibration to the reflection intensity during the school-of-fish detection, the reliability of the school-of-fish detection (e.g., the measurement accuracy of the length of the fish 3) can be maintained.

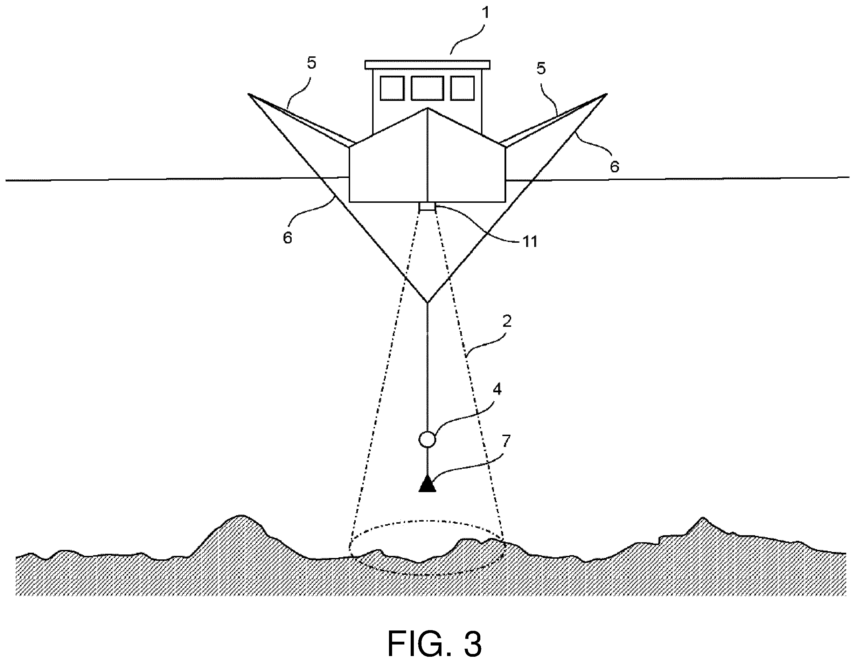

Fig. 3 is a view illustrating a state in which a calibration ball 4 is hung from the ship 1 in order to calibrate the underwater detection device 10.

As illustrated in Fig. 3, during the calibration, the calibration ball 4 made of metal material (e.g., tungsten carbide, and copper) may be hung using rods 5 and fishing lines 6 from a plurality of directions to be located vertically from (directly below) the transducer 11. **In** order to stabilize the position of the calibration ball 4, a sinker or weight 7 may be provided below the calibration ball 4. A distance from the ship 1 to the calibration ball 4 (i.e., a depth to the calibration ball 4) may be decided depending on the depth of the marine area to be surveyed. The ship 1 may be in a stopped state.

The transducer 11 transmits the transmission beam 2 (ultrasonic waves) to the calibration ball 4, and receives the reflection waves reflected on the calibration ball 4. Then, the calibration is performed based on the reception signals from the transducer 11, in detail, the reflection intensity at the calibration ball 4 acquired based on the reception signals.

Since the transducer 11 vertically (directly downwardly) transmits the transmission beam 2, the calibration can be performed in the center axis direction among all the directions included in the range of the cone-shaped transmission beam 2. For example, the calibration value acquired in this calibration can be uniformly applied to the reflection intensity of the reflection wave received from any direction during the school-of-fish detection.

However, depending on the configuration of the parts of the underwater detection device 10, a change in the reception signal (i.e., the reflection intensity) due to the time-related degradation of the parts may differ according to the directions in the detection range. For example, the underwater detection device 10 is provided with the transducer 11 comprised of the plurality of ultrasonic oscillators 11a, and the plurality of receiving parts 13a to 13d. Therefore, when performance of some of the ultrasonic oscillators 11a, or some of the receiving parts 13a to 13d changes, it is unlikely to uniformly affect in all the directions. In such a case, the uniform application of the calibration value as described above may be difficult to sufficiently secure the detection accuracy.

Therefore, in the calibration of this embodiment, the range of the transmission beam 2 (i.e., all the directions included in the detection range) is divided into a plurality of sections, and the calibration using the calibration ball 4 is performed for each directional range (section). In this embodiment, in order to move the calibration ball 4 to the respective ranges, instead of moving the calibration ball 4 itself, the direction of the transmission beam 2 is changed, thus the calibration ball 4 being moved relative to the transmission beam 2. Below, the calibration of this embodiment is described in detail.

The program stored in the signal processor 15 may include a program for executing the calibration. As illustrated in Fig. 2, the signal processor 15 is provided with a direction controlling module 15a and a calibrating module 15b as functional parts given by the calibration program.

The direction controlling module 15a executes a directional control for sequentially changing the direction of the transmission beam 2 transmitted from the transducer 11 toward the calibration ball 4.

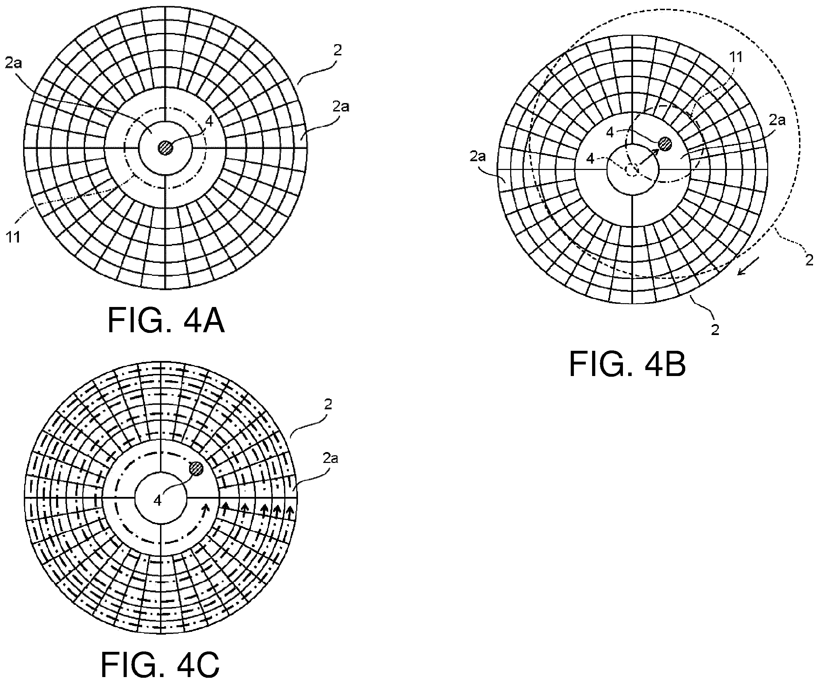

Figs. 4A to 4C are views illustrating the directional control of the transmission beam 2 by the direction controlling module 15a. Figs. 4A to 4C are views when the transmission beam 2 transmitted toward the calibration ball 4 is seen from the transducer 11 side. Note that the transducer 11 is illustrated by one-dot chain lines in Figs. 4A and 4B.

The range of the transmission beam 2 is divided into a plurality of sections 2a in a direction intersecting with (orthogonal to) the direction of the transmission beam 2. A range of each section 2a may be the same as a range of resolution in the direction to be detected by the signal processor 15, or may be larger than that. Moreover, the shape, size, and number of the sections 2a may be set suitably.

The direction controlling module 15a executes the directional control so as to sequentially and relatively move the calibration ball 4 to all of the sections 2a in accordance with a given order. That is, first, the direction controlling module 15a controls the transmitting part 12 to transmit the transmission beam 2 from the transducer 11 directly below. As described above, the calibration ball 4 may be located directly below the transducer 11. Therefore, as illustrated in Fig. 4A, the calibration ball 4 may be located at the center section 2a in the transmission beam 2.

Next, the direction controlling module 15a changes the direction of the transmission beam 2 to relatively move the calibration ball 4 to the next section 2a as illustrated in Fig. 4B. Here, as indicated by arrows in Fig. 4B, the direction of the transmission beam 2 is shifted symmetrically to a direction in which the calibration ball 4 is moved, with respect to the center axis of the transmission beam 2.

Then, the direction controlling module 15a sequentially changes the direction of the transmission beam 2 so that, as indicated by one-dot chain lines in Fig. 4C, the calibration ball 4 is sequentially and relatively moved to the respective sections 2a in a swirl-like manner to an outer circumferential side. In this manner, the directional control by the direction controlling module 15a can relatively move the calibration ball 4 to all of the sections 2a.

As illustrated in Fig. 2, the storage medium of the signal processor 15 is provided with an association table 15c. The association table 15c stores direction data relating to the direction of the transmission beam 2 corresponding to the section 2a, so as to move the calibration ball 4 to the section 2a. When the direction controlling module 15a determines the direction of the transmission beam 2, it reads from the association table 15c the direction data corresponding to the determined direction, and sends it to the transmitting part 12. The transmitting part 12 generates the transmission signals based on the direction data, and the generated transmission signals are outputted to the ultrasonic oscillators 11a of the transducer 11.

The calibrating module 15b calibrates the underwater detection device 10 based on the reception signals outputted from the transducer 11 when the reflection waves from the calibration ball 4 are received. That is, the calibrating module 15b executes the calibration for each of the sections 2a in the transmission beam 2 based on the reception signals corresponding to the reflection waves from the calibration ball 4 located in the section 2a, and calculates the calibration value in the section 2a (i.e., in the directional range).

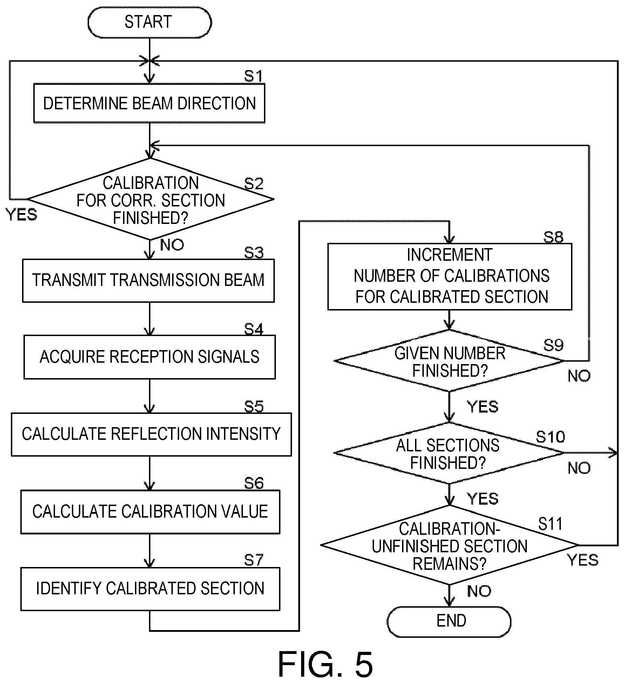

Fig. 5 is a flowchart illustrating the calibration processing.

When manipulation is performed to the input part 16 in order to calibrate, the processing starts.

Referring to Fig. 5, the signal processor 15 determines the direction of the transmission beam 2 (Step S1). The first direction of the transmission beam 2 may be directly below the transducer 11. Next, the signal processor 15 determines whether the calibration for the section 2a corresponding to the determined direction (hereinafter, referred to as a "corresponding section" and "CORR. SECTION") is already finished (Step S2). For example, when the direction of the transmission beam 2 is directly below the transducer 11, the center section 2a of the transmission beam 2 may be the corresponding section 2a (see Fig. 4A).

Note that, as described above, the calibration ball 4 may be located directly below the transducer 11 before the start of the calibration. Therefore, when the calibration ball 4 is located directly below the transducer 11, and the transmission beam 2 is transmitted toward the determined direction, the calibration ball 4 may be relatively moved to the corresponding section 2a. However, actually, a physical position of the calibration ball 4 may deviate from the directly below the transducer 11 during the calibration due to a tide change etc. Therefore, even when the transmission beam 2 is transmitted in the determined direction, the calibration ball 4 may not be moved to the corresponding section 2a. Thus, the corresponding section 2a may be referred to as the section (assumed section) 2a to which the calibration ball 4 is assumed to be moved based on the direction of the transmission beam 2.

If the calibration for the corresponding section 2a is not finished (Step S2: NO), the signal processor 15 reads from the association table 15c the direction data of the determined direction, and outputs the direction data to the transmitting part 12 together with a command for transmitting the waves, so as to transmit the transmission beam 2 from the transducer 11 in the determined direction (Step S3). The processing at Steps S1 to S3 may be executed by the function of the direction controlling module 15a illustrated in Fig. 2.

The signal processor 15 acquires from the four receiving parts 13a to 13d the reception signals corresponding to the reflection waves from the calibration ball 4 (Step S4), and calibrates the underwater detection device 10 (Steps S5 and S6).

That is, the signal processor 15 calculates the reflection intensity based on the four received reception signals (Step S5). Here, the signal processor 15 also calculates the direction of the calibration ball 4.

The signal processor 15 stores in the storage medium a reference value of the reflection intensity of the calibration ball 4. The signal processor 15 calculates the calibration value based on a difference between the calculated value and the reference value of the reflection intensity (Step S6). The calibration value may be a rate of change used for the correction of the reflection intensity of the fish 3 (target object) calculated based on the reception signals during the school-of-fish detection.

The processing at Steps S4 to S6 is executed by the function of the calibrating module 15b illustrated in Fig. 2.

Note that the reference value of the reflection intensity may be a theoretical value when the transmission beam 2 is transmitted directly below the transducer 11, and the calibration ball 4 may be located on the center axis of the transmission beam 2. Therefore, when the direction of the transmission beam 2 is other than directly below, the position of the calibration ball 4 may deviate from the center axis of the transmission beam 2. Thus, even in a normal state, the calculated reflection intensity may be smaller than the reference value by an amount of decrease in the reception sensitivity of the transducer 11 due to its directivity characteristic etc. Therefore, when the reflection intensity is calculated at Step S5, correction according to the direction of the transmission beam 2 may be performed. Note that the correction according to the direction of the transmission beam 2 may be applied to the reference value instead of the calculated value. Moreover, the calculated value of the reflection intensity may change as the depth to the calibration ball 4 changes. Therefore, the calculated value of the reflection intensity may be corrected according to the depth to the calibration ball 4. Different reference values may be set for the respective depths instead of correcting the calculated value.

Moreover, as described above, the calibration ball 4 may not be moved to the corresponding section 2a, but to the other sections 2a. Therefore, in this embodiment, the signal processor 15 (the calibrating module 15b) may execute the calibration regardless of whether the section 2a to which the calibration ball 4 is moved is the corresponding section (assumed section) 2a (Steps S5 and S6).

Next, the signal processor 15 identifies the calibrated section 2a based on the direction of the calibration ball 4 calculated at Step S5 (Step S7), and increments the number of calibrations for that section 2a by one (Step S8). If the calibration ball 4 is moved to the corresponding section 2a, the calibration number for the corresponding section 2a is incremented by one, and if the calibration ball 4 is moved to another section 2a, the calibration number for the other section 2a is incremented by one. The signal processor 15 may be provided with counters for the respective sections 2a, and these counters may count the number of calibrations. When the calibration number reaches a specified number (e.g., five), the calibration for the section 2a is finished. That is, the calibration values may be calculated a plurality of times for one section 2a, and an average of these values may be the calibration value applied in the school-of-fish detection. The calibration value is stored in the storage medium of the signal processor 15.

The signal processor 15 determines whether a given number of calibrations are finished in the same direction of the transmission beam 2 (Step S9). The given number is, for example, the same as the specified number. The given number may be larger than the specified number. The signal processor 15 repeats the processing at Steps S2 to S8 until the given number of calibrations are finished (Step S9: NO).

Note that, during the given number of calibrations, unless the direction of the calibration ball 4 relative to the transmission beam 2 is changed to the amount of being moved to other sections 2a, the number of calibrations for the corresponding section 2a or another section 2a where the calibration ball 4 is located when the given number of calibrations is finished, may reach the specified number, and thus, the calibrations for this section 2a may be finished. On the other hand, during the given number of calibrations, if the direction of the calibration ball 4 is changed to the amount of being moved to other sections 2a, the numbers of calibrations for the corresponding section 2a and the other section 2a may not reach the specified number, and thus, the calibrations for these sections 2a may not be finished.

When the given number of calibrations is finished (Step S9: YES), the signal processor 15 determines whether the directional control for moving the calibration ball 4 all over the sections 2a (hereinafter, referred to as a "directional control for all the sections 2a"), is finished (Step S10). If the directional control for all the sections 2a is not finished (Step S10: NO), the processing returns to Step S1 to determine the next direction of the transmission beam 2. Then, the signal processor 15 repeats the processing at Steps S2 to S8 until the given number of calibrations is finished in the determined direction of the transmission beam 2 (Step S9: YES). The signal processor 15 sequentially changes the direction of the transmission beam 2 and repeats the processing at Steps S1 to S9 until the directional control for all the sections 2a is finished (Step S10: YES).

Meanwhile, it may be determined at Step S2 that the calibration is finished for the corresponding section 2a corresponding to the determined direction (Step S2: YES) even though the calibration is not performed even once by the transmission beam 2 in this direction, or before the given number of calibrations is finished by the transmission beam 2 in this direction. Such a determination may be made when the specified number or less than the specified number of calibrations is executed for that corresponding section 2a, due to the positional deviation of the calibration ball 4 during the preceding transmissions of the transmission beams 2 in different directions. In such as case, the signal processor 15 returns to Step S1 to determine the next direction of the transmission beam 2.

When the directional control for all the sections 2a is finished (Step S10: YES), the signal processor 15 determines whether the section 2a for which the calibration is not finished (calibration-unfinished section 2a) remains (Step S11). Then, if the calibration-unfinished section 2a remains (Step S11: YES), the signal processor 15 returns to Step S1 to determine the direction of the transmission beam 2, and again, start the calibrations for all the sections 2a (Steps S1 to S10). However, since whether the calibration for the corresponding section 2a is finished is determined at Step S2, the signal processor 15 (the direction controlling module 15a) executes the directional control for moving the calibration ball 4 only to the calibration-unfinished section 2a (Steps S1 to S3). Then, the signal processor 15 (the calibrating module 15b) executes the calibration only for the calibration-unfinished section 2a (Steps S4 to S6).

In this manner, if there is no calibration-unfinished section 2a when the directional control for all the sections 2a is finished (Step S10: YES → Step S11: NO), that is, when the calibrations for all the sections 2a are finished, the signal processor 15 ends the calibration.

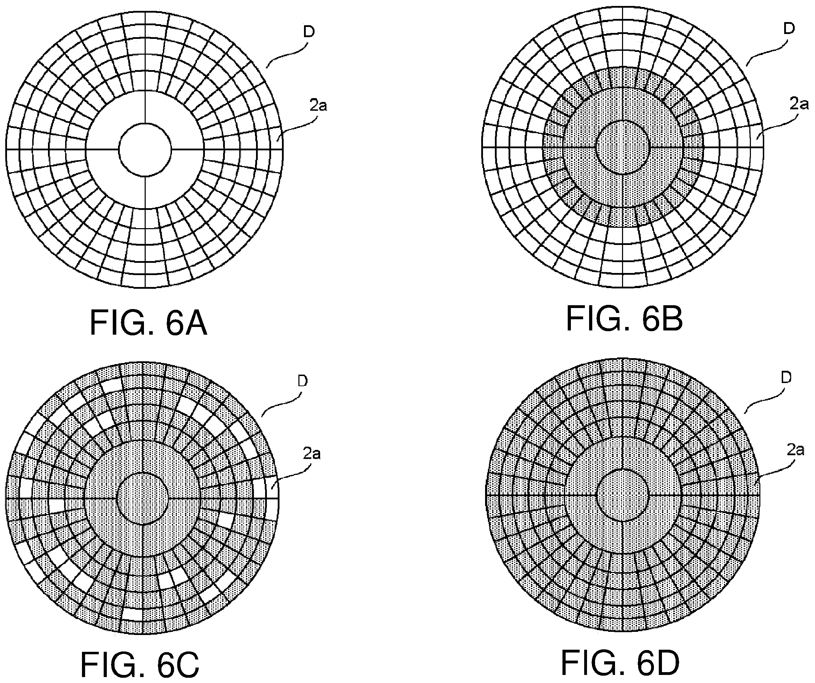

Figs. 6A to 6D are views illustrating one example of a progress-showing image D indicative of the progress of the calibration.

When the calibration starts, the progress-showing image D indicative of the progress of the calibration as illustrated in Fig. 6A may be displayed on the display part 17. The progress-showing image D is, for example, an image showing all the sections 2a on a circular cross section of the transmission beam 2. As illustrated in Fig. 6B, a color of the calibrated sections 2a may be changed to a color indicative of "Finished." As illustrated in Fig. 6C, if the calibration-unfinished sections 2a exist when the directional control for all the sections 2a is finished, the color of the sections 2a remains unchanged. As illustrated in Fig. 6D, when the directional control for all the sections 2a is finished a few times, and the calibrations for all the sections 2a are finished, the colors of all the sections 2a are changed to the color indicative of "Finished."

The user can easily grasp the progress of the calibration by looking at the progress-showing image D displayed on the display part 17.

Alternatively, the color of the calibration-unfinished section 2a may be changed to a color corresponding to the number of calibrations. In this manner, the user can grasp the progress in more detail.

### <Effects of Embodiment>

This embodiment may achieve the following effects.

Since all the directions included in the detection range of the transmission beam 2 is divided into the plurality of sections 2a, and the calibration is performed for each directional range (section 2a) using the calibration ball 4, the accuracy of the calibration improves, and thus, the sufficient detection accuracy can be secured.

Moreover, since the direction of the transmission beam 2 is changed to move the calibration ball 4 relative to the transmission beam 2 so that the calibration ball 4 is moved to each section 2a, the calibration for each section 2a is possible without the calibration ball 4 physically being moved. Thus, time required for the calibrations for all the sections 2a can be shortened.

Moreover, the calibration may be performed regardless of whether the section 2a to which the calibration ball 4 is moved is the section (corresponding section) 2a assumed based on the direction of the transmission beam 2. Therefore, even when the position of the calibration ball 4 is unstable due to the influence of tide etc., and the actually moved position of the calibration ball 4 is not the assumed section 2a, the calibration for the moved section 2a can be performed first, and thus, the time required for the calibration can be further shortened.

Moreover, if the calibration-unfinished section 2a exists after the directional control for sequentially moving the calibration ball 4 to all the sections 2a is executed, the directional control for moving the calibration ball 4 to the calibration-unfinished section 2a may be executed. Accordingly, since the calibration for the calibration-unfinished section 2a can be finished, the calibrations for all the sections 2a (all directions) can be performed without omission.

Although the embodiment of the present disclosure is described as described above, the present disclosure is not limited to the embodiment. Moreover, the embodiment of the present disclosure can be variously changed from the above configuration.

### <Modification 1>

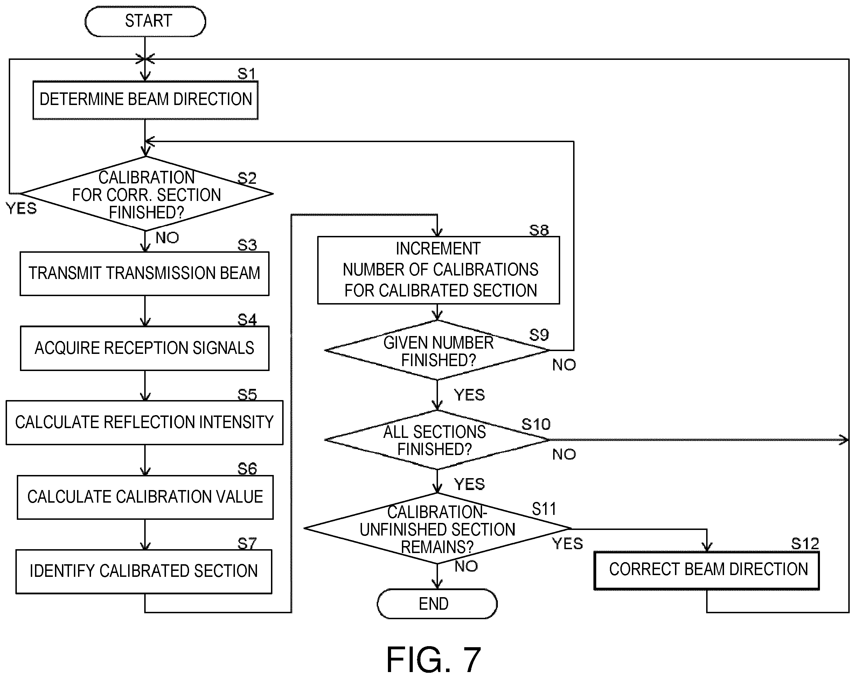

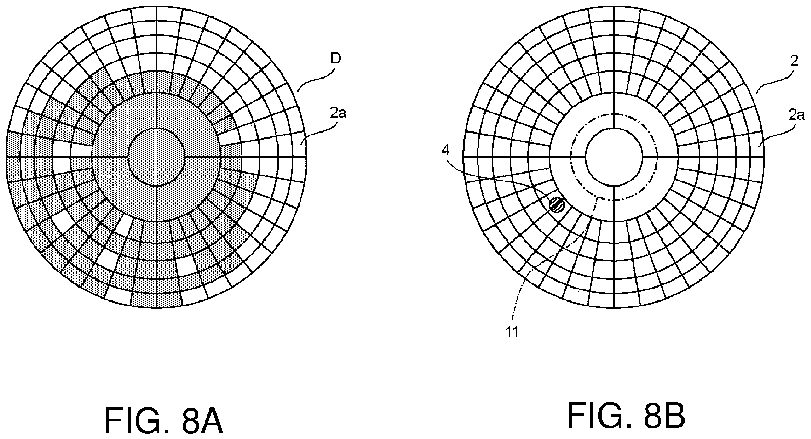

Fig. 7 is a flowchart illustrating calibration processing according to Modification 1. Figs. 8A and 8B are views illustrating one example of correcting the direction of the transmission beam 2 according to Modification 1.

As illustrated in Fig. 7, in Modification 1, if the calibration-unfinished section 2a remains when the directional control for all the sections 2a is finished (Step S10: YES → Step S11: YES), the direction of the transmission beam 2 may be corrected according to the degree of deviation (direction, amount, etc.) between the section (corresponding section) 2a assumed based on the direction of the transmission beam 2, and the section 2a to which the calibration ball 4 is actually moved (Step S12). The processing at Step S12 may be executed by the function of the direction controlling module 15a.

For example, the signal processor 15 may determine a correction value for correcting the direction data read from the association table 15c. For example, after the directional control for all the sections 2a is finished, as illustrated in the progress-showing image D of Fig. 8A, if the range where the calibrated sections 2a exist tends to deviate to a certain direction as a whole, it is highly possible that the calibration ball 4 located directly below the transducer 11 is moved to the certain direction due to the influence of tide etc. as illustrated in Fig. 8B. Therefore, in this case, the signal processor 15 may determine the correction value such that the direction determined at Step S1 is further shifted in the moved direction of the calibration ball 4.

Accordingly, in the processing at Step S3 during the next directional control for all the sections 2a, the signal processor 15 (the direction controlling module 15a) may correct the direction data read from the association table 15c by the correction value, and output the corrected direction data to the transmitting part 12.

As described above, according to Modification 1, when the calibration ball 4 is moved from the position where it is located before the start of the calibration, the direction of the transmission beam 2 may be adjusted according to the move, and thus, the time required for the calibration can be further shortened.

### <Modification 2>

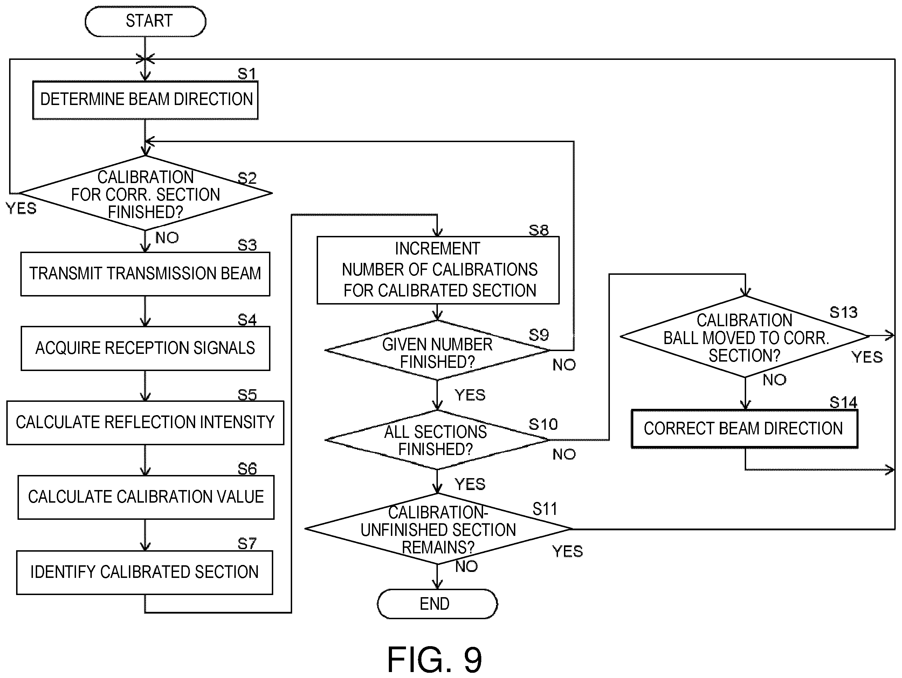

Fig. 9 is a flowchart illustrating calibration processing according to Modification 2.

In Modification 1, the direction of the transmission beam 2 may be corrected as necessary (i.e., when the calibration-unfinished section 2a exists) every time the directional control for all the sections 2a is finished. On the other hand, in Modification 2, the direction of the transmission beam 2 may be corrected as necessary every time the given number of calibrations are finished for one section 2a.

As illustrated in Fig. 9, in Modification 2, when the signal processor 15 determines at Step S10 that the directional control for all the sections 2a is not finished (Step S10: NO), the signal processor 15 may determine whether the calibration ball 4 is moved to the corresponding section (assumed section) 2a by the transmission beam 2 in the direction of this time (Step S13). For example, when the calibration ball 4 is moved to the corresponding section 2a in all of the given number of the transmissions of the transmission beams 2, the signal processor 15 may determine as "YES" at Step S13. Alternatively, the signal processor 15 may determine as "YES" at Step S13, when the calibration ball 4 is moved to the corresponding section 2a in more than half the given number of transmissions of the transmission beams 2, that is, when the calibration ball 4 is generally moved to the corresponding section 2a.

When the signal processor 15 determines that the calibration ball 4 is not moved to the corresponding section 2a (Step S13: NO), the signal processor 15 may correct the direction of the next transmission beam 2 according to the deviation between the corresponding section 2a and the section 2a to which the calibration ball 4 is actually moved (Step S14). For example, the signal processor 15 may determine the correction value for correcting the direction data relating to the next direction of the transmission beam 2, according to the deviation in the direction and amount between the corresponding section 2a and the actually moved section 2a. The processing at Steps S13 and S14 may be executed by the function of the direction controlling module 15a.

At Step S3 for the next time, the signal processor 15 (the direction controlling module 15a) may correct the direction data read from the association table 15c by the correction value, and output the corrected direction data to the transmitting part 12.

According to Modification 2, since the direction of the transmission beam 2 is adjusted according to the positional deviation of the calibration ball 4 similar to Modification 1, the time required for the calibration can be further shortened.

Note that instead of Modification 2 the processing at Steps S13 and S14 may be executed every time one calibration for the section 2a is finished (Step S9: NO), and the current direction of the transmission beam 2 may be corrected if the calibration ball 4 is not moved to the corresponding section 2a by the transmission beam 2 in the current direction. That is, the concrete method and timing of the correction may be suitably changed, as long as the direction of the transmission beam 2 is corrected according to the deviation between the corresponding section 2a and the section 2a to which the calibration ball 4 is actually moved.

### <Other Modifications>

In the embodiment the calibration ball 4 is relatively moved to each section 2a by the directional control of the transmission beam 2 in the order illustrated in Fig. 4C. However, the order of moving the calibration ball 4 is not limited to the one illustrated in Fig. 4C, but may be in any order.

Moreover, in the embodiment, the calculated value of the reflection intensity may be corrected, or the reference value of the reflection intensity may be set according to the size or material of the calibration ball 4.

Moreover, although in the embodiment a single calibration ball 4 is used for the calibration, a plurality of (e.g., two) calibration balls 4 may be used for the calibration. In this case, the plurality of calibration balls 4 may be vertically aligned, or horizontally aligned. When the plurality of calibration balls 4 are used in this manner, the time required for the calibration may be shortened.

Moreover, although in the embodiment the calibration ball 4 is used for the calibration, a reference body for calibration other than the calibration ball 4 (e.g., a reference body having the shape other than sphere) may be used for the calibration.

Moreover, although in the embodiment the calibration is finished when the plurality of calibrations are performed for each section 2a, the calibration may be finished when one calibration is performed for each section 2a.

Moreover, in the embodiment, the calibration may be performed for the section 2a to which the calibration ball 4 is relatively moved, regardless of whether the calibration ball 4 is moved to the corresponding section (assumed section) 2a. However, the calibration may be performed for the section 2a only when the calibration ball 4 is moved to the corresponding section 2a.

Moreover, although in the embodiment the transducer 11 may be comprised of the plurality of ultrasonic oscillators 11a which transmit and receive waves, the transducer 11 may be comprised of a plurality of ultrasonic oscillators for transmitting waves, and a plurality of ultrasonic oscillators for receiving waves, separately.

Other than the modifications described above, the embodiment of the present disclosure can be suitably changed variously within the scope of the appended claims.

### Description of Reference Characters

- 2: Transmission Beam
- 2a: Section
- 4: Calibration Ball (Reference Body for Calibration)
- 10: Underwater Detection Device
- 11: Transducer
- 15: Signal Processor
- 15a: Direction Controlling Module
- 15b: Calibrating Module

## Claims

1. An underwater detection device (10), comprising:
a transmitting part (12) configured to control a phase of a transmission signal to be outputted to a plurality of ultrasonic oscillators (11a) of a transducer (11) so as to direct a transmission beam (2) in an arbitrary direction;
**characterized by**:
a direction controlling module (15a) configured to execute a directional control for sequentially changing a direction of the transmission beam (2) transmitted from the transducer (11) toward a reference body (4) for calibration; and
a calibrating module (15b) configured to calculate a direction of the reference body (4) by a split beam method and to calibrate the underwater detection device (10) based on a reception signal outputted from the transducer (11) when the transducer (11) receives a reflection wave (2) from the reference body (4).

2. The underwater detection device (10) of claim 1, wherein a directional range of the transmission beam (2) is divided into a plurality of sections (2a), and
wherein the direction controlling module (15a) executes the directional control to move the transmission beam relative to the reference body (4) to sequentially move the position of the reference body (4) to all the sections (2a) of the transmission beam (2).

3. The underwater detection device (10) of claim 2, wherein the calibrating module (15b) calibrates the underwater detection device (10) regardless of whether the section (2a) to which the position of the reference body (4) is moved, based on the calculated direction, is the section (2a) to which the reference body (4) is assumed to be moved based on the direction of the transmission beam (2).

4. The underwater detection device (10) of claim 2 or 3, wherein the calibrating module (15b) is arranged to carry out a specified number of calibrations for a section (2a), and when a section (2a) for which the calibration is not finished remains after the direction controlling module (15a) executes the directional control for sequentially moving the reference body (4) to all the sections (2a), the direction controlling module (15a) executes the directional control for moving the reference body (4) to the section (2a) for which the calibration is not finished.

5. The underwater detection device (10) of any one of claims 2 to 4, wherein the direction controlling module (15a) corrects the direction of the transmission beam (2) according to a deviation between the section (2a) to which the reference body (4) is assumed to be moved based on the direction of the transmission beam (2), and the section (2a) to which the reference body (4) is actually moved based on the calculated direction.

6. A method of calibrating an underwater detection device (10), comprising the steps of:
controlling a phase of a transmission signal to be outputted to a plurality of ultrasonic oscillators (11a) of a transducer (11) so as to direct a transmission beam (2) in an arbitrary direction;
**characterized by**:
sequentially changing a direction of the transmission beam (2) transmitted from the transducer (11) toward a reference body (4) for calibration;
calculating a direction of the reference body (4) by a split beam method; and
calibrating the underwater detection device (10) based on a reception signal outputted from the transducer (11) when the transducer (11) receives a reflection wave (2) from the reference body (4).

## Patentansprüche

1. Unterwasser-Detektionsgerät (10), das Folgendes umfasst:
einen Sendeteil (12), konfiguriert zum Steuern einer Phase eines Sendesignals, das an mehrere Ultraschalloszillatoren (11a) eines Wandlers (11) auszugeben ist, um einen Sendestrahl (2) in eine beliebige Richtung zu lenken;
**gekennzeichnet durch**:
ein Richtungssteuerungsmodul (15a), konfiguriert zum Ausführen einer Richtungssteuerung zum sequenziellen Ändern der Richtung des vom Wandler (11) gesendeten Sendestrahls (2) zu einem Referenzkörper (4) hin zur Kalibrierung; und
ein Kalibrierungsmodul (15b), konfiguriert zum Berechnen einer Richtung des Referenzkörpers (4) mit einem Split-Beam-Verfahren und zum Kalibrieren des Unterwasser-Detektionsgeräts (10) auf der Basis eines Empfangssignals, das vom Wandler (11) ausgegeben wird, wenn der Wandler (11) eine Reflexionswelle (2) von dem Referenzkörper (4) empfängt.

2. Unterwasser-Detektionsgerät (10) nach Anspruch 1, wobei ein Richtungsbereich des Sendestrahls (2) in mehrere Abschnitte (2a) unterteilt ist, und
wobei das Richtungssteuerungsmodul (15a) die Richtungssteuerung ausführt, um den Sendestrahl relativ zum Referenzkörper (4) zu bewegen, um die Position des Referenzkörpers (4) sequenziell zu allen Abschnitten (2a) des Sendestrahls (2) zu bewegen.

3. Unterwasser-Detektionsgerät (10) nach Anspruch 2, wobei das Kalibrierungsmodul (15b) das Unterwasser-Detektionsgerät (10) unabhängig davon kalibriert, ob der Abschnitt (2a), zu dem die Position des Referenzkörpers (4) auf der Basis der berechneten Richtung bewegt wird, der Abschnitt (2a) ist, zu dem der Referenzkörper (4) auf der Basis der Richtung des Sendestrahls (2) vermutlich bewegt wird.

4. Unterwasser-Detektionsgerät (10) nach Anspruch 2 oder 3, wobei das Kalibrierungsmodul (15b) zum Durchführen einer bestimmten Anzahl von Kalibrierungen für einen Abschnitt (2a) ausgelegt ist, und wenn nach der Ausführung der Richtungssteuerung durch das Richtungssteuerungsmodul (15a) zum sequenziellen Bewegen des Referenzkörpers (4) zu allen Abschnitten (2a) ein Abschnitt (2a) verbleibt, für den die Kalibrierung nicht abgeschlossen ist, das Richtungssteuerungsmodul (15a) die Richtungssteuerung zum Bewegen des Referenzkörpers (4) zu dem Abschnitt (2a) ausführt, für den die Kalibrierung nicht abgeschlossen ist.

5. Unterwasser-Detektionsgerät (10) nach einem der Ansprüche 2 bis 4, wobei das Richtungssteuerungsmodul (15a) die Richtung des Sendestrahls (2) gemäß einer Abweichung zwischen dem Abschnitt (2a), zu dem der Referenzkörper (4) auf der Basis der Richtung des Sendestrahls (2) vermutlich bewegt wird, und dem Abschnitt (2a) korrigiert, zu dem der Referenzkörper (4) tatsächlich auf der Basis der berechneten Richtung bewegt wird.

6. Verfahren zum Kalibrieren eines Unterwasser-Detektionsgeräts (10), das die folgenden Schritte beinhaltet:
Steuern einer Phase eines an mehrere Ultraschalloszillatoren (11a) eines Wandlers (11) auszugebenden Sendesignals, um einen Sendestrahl (2) in eine beliebige Richtung zu lenken;
**gekennzeichnet durch**:
sequentielles Ändern einer Richtung des vom Wandler (11) zu einem Referenzkörper (4) hin zur Kalibrierung gesendeten Sendestrahls (2);
Berechnen einer Richtung des Referenzkörpers (4) mit einem Split-Beam-Verfahren; und
Kalibrieren des Unterwasser-Detektionsgeräts (10) auf der Basis eines Empfangssignals, das vom Wandler (11) ausgegeben wird, wenn der Wandler (11) eine Reflexionswelle (2) vom Referenzkörper (4) empfängt.

## Revendications

1. Dispositif de détection sous-marine (10), comprenant :
une partie émettrice (12) configurée pour commander une phase d'un signal d'émission à délivrer en sortie à une pluralité d'oscillateurs ultrasonores (11a) d'un transducteur (11) afin de diriger un faisceau d'émission (2) dans une direction arbitraire ;
le dispositif étant **caractérisé par** :
un module de commande de direction (15a) configuré pour exécuter une commande directionnelle afin de modifier séquentiellement une direction du faisceau d'émission (2) émis par le transducteur (11) vers un corps de référence (4) en vue d'un étalonnage ; et
un module d'étalonnage (15b) configuré pour calculer une direction du corps de référence (4) par une méthode à faisceau séparé et pour étalonner le dispositif de détection sous-marine (10) sur la base d'un signal de réception délivré en sortie par le transducteur (11) lorsque le transducteur (11) reçoit une onde de réflexion (2) en provenance du corps de référence (4).

2. Dispositif de détection sous-marine (10) selon la revendication 1, une plage directionnelle du faisceau d'émission (2) étant divisée en une pluralité de sections (2a), et
le module de commande de direction (15a) exécutant la commande directionnelle pour déplacer le faisceau d'émission par rapport au corps de référence (4) afin de déplacer séquentiellement la position du corps de référence (4) vers toutes les sections (2a) du faisceau d'émission (2).

3. Dispositif de détection sous-marine (10) selon la revendication 2, le module d'étalonnage (15b) étalonnant le dispositif de détection sous-marine (10) indépendamment du fait que la section (2a) vers laquelle la position du corps de référence (4) est déplacée, sur la base de la direction calculée, soit la section (2a) vers laquelle le corps de référence (4) est supposé être déplacé sur la base de la direction du faisceau d'émission du faisceau (2).

4. Dispositif de détection sous-marine (10) selon la revendication 2 ou 3, le module d'étalonnage (15b) étant conçu pour effectuer un nombre spécifié d'étalonnages pour une section (2a), et lorsqu'il reste une section (2a) pour laquelle l'étalonnage n'est pas terminé après l'exécution, par le module de commande de direction (15a), de la commande directionnelle pour déplacer séquentiellement le corps de référence (4) vers toutes les sections (2a), le module de commande de direction (15a) exécutant la commande directionnelle pour déplacer le corps de référence (4) vers la section (2a) pour laquelle l'étalonnage n'est pas terminé.

5. Dispositif de détection sous-marine (10) selon l'une quelconque des revendications 2 à 4, le module de commande de direction (15a) corrigeant la direction du faisceau d'émission (2) selon un écart entre la section (2a) vers laquelle le corps de référence (4) est supposé être déplacé sur la base de la direction du faisceau d'émission (2) et la section (2a) vers laquelle le corps de référence (4) est réellement déplacé sur la base de la direction calculée.

6. Procédé d'étalonnage d'un dispositif de détection sous-marine (10), comprenant l'étape consistant à :
commander une phase d'un signal d'émission à délivrer en sortie à une pluralité d'oscillateurs ultrasonores (11a) d'un transducteur (11) afin de diriger un faisceau d'émission (2) dans une direction arbitraire ;
le procédé étant **caractérisé par** les étapes consistant à :
modifier séquentiellement une direction du faisceau d'émission (2) émis par le transducteur (11) vers un corps de référence (4) en vue d'un étalonnage ;
calculer une direction du corps de référence (4) par une méthode à faisceau séparé ; et
étalonner le dispositif de détection sous-marine (10) sur la base d'un signal de réception délivré en sortie par le transducteur (11) lorsque le transducteur (11) reçoit une onde de réflexion (2) en provenance du corps de référence (4).
